(19) **Europäisches Patentamt / European Patent Office / Office européen des brevets**

(11) **EP 1 944 987 B1**

(12) **EUROPEAN PATENT SPECIFICATION**

(45) Date of publication and mention
of the grant of the patent:
**13.03.2013 Bulletin 2013/11**

(51) Int Cl.:
*H04W 16/06* (2009.01)     *H04W 28/16* (2009.01)
*H04W 52/14* (2009.01)     *H04W 52/36* (2009.01)

(21) Application number: **07300719.7**

(22) Date of filing: **11.01.2007**

(54) **A method for allocation of radio resources in multi cell communication networks, a base station and a multi cell communication network therefor**

Verfahren zur Zuweisung von Funkressourcen in mehrzelligen Kommunikationsnetzen, Basisstation und mehrzelliges Kommunikationsnetz dafür

Procédé d'attribution de ressources radio dans des réseaux de communication à cellules multiples, une station de base et un réseau de communication à cellules multiples correspondant

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**16.07.2008 Bulletin 2008/29**

(73) Proprietor: **Alcatel Lucent**
**75007 Paris (FR)**

(72) Inventors:
• **Gerlach, Christian**
**71254 Ditzingen (DE)**
• **Weber, Andreas**
**74251 Lehrensteinsfeld (DE)**
• **Zeller, Dietrich**
**71067 Sindelfingen (DE)**

(74) Representative: **Kleinbub, Oliver et al**
**Alcatel-Lucent Deutschland AG**
**Intellectual Property & Standards**
**Lorenzstrasse 10**
**70435 Stuttgart (DE)**

(56) References cited:
**EP-A- 1 734 773       WO-A-92/12601**
**WO-A-97/15995       WO-A-98/44754**

**Description**

The invention relates to a method for allocation of radio resources according to the preamble of claim 1, a base station according to the preamble of claim 11, and a multi cell communication network according to the preamble of claim 12.

Frequency division multiplexing (FDM) transmission schemes such as Orthogonal Frequency Division Multiplexing (OFDM), single carrier Frequency Division Multiple Access (FDMA) or distributed FDMA such as interleaved FDMA with multiple terminals will become increasingly important e.g. for future evolutions of air interfaces for mobile radio systems. Those radio systems are currently under discussion e.g. in Third Generation Partnership Project (3GPP) Technical Specification Group (TSG) Radio Access Network (RAN), for Wireless Local Area Networks (WLANs) e.g. according to standard IEEE 802.11a, or for a 4th generation air interface.

Given the licensed bandwidth, transmission capacity from network providers e.g. for picture uploading or video communication has to be as high as possible for all users to serve as many subscribers as possible. Further the quality of service experienced by the user and especially the coverage of the service is an important property demanded by the user. So an access scheme shall work well at the cell borders of networks with frequency reuse.

In cellular systems with a frequency reuse factor of 1 the signal to interference ratio at the cell border can approach the factor 1 or 0 dB, so that no useful transmission from a user terminal to the base station can be kept up if a user terminal from a neighboring cell is near to the considered user terminal and sends with the same power on the same frequencies. Correspondingly in this situation in downlink the interfering base station of a neighbor cell transmits with the same power as the serving cell resulting in SIR of 0 dB.

Therefore in CDMA (CDMA = Code Division Multiple Access) a soft handover exists and the user terminals always use a different (terminal specific) scrambling code in the uplink. The reception is then possible using the spreading gain from CDMA. As is known due to the strong interference the uplink capacity is considerably limited. The same is true for the downlink.

In FDM transmission, frequency groups are allocated to a user terminal instead of codes in CDMA transmission. In FDMA orthogonal transmission schemes, frequencies are also allocated to a user terminal in UL or DL. So in these schemes in contrast to CDMA transmission, interference can be planned and avoided. For these orthogonal transmission schemes the problem at the cell border has to be solved as well.

A known concept of frequency planning for the cells is giving each whole cell a distinct frequency band.

However, frequency distribution to the different cells reduces the available uplink resources per cell very considerably e.g. by a factor of 1/3 or 1/7 and thus the overall system throughput. It is a waste of resources for the inner area of a cell.

A frequency reuse of e.g. 1/3 only in the outer part of the cell is possible but still wastes too much resources.

A possible concept for coordination of the interference between cells of a network with frequency reuse offering a good usage of the available resources is to subdivide the overall frequency resource into frequency subsets. In every cell a dedicated frequency subset is used with a power restriction. This dedicated frequency subset is assigned by neighboring cells to user terminals approaching this cell. This improved signal to interference ratio (SIR) on dedicated frequency subsets for certain user terminals in the border of a cell will be exploited by the scheduler of the base station of the cell in downlink or uplink.

Such a concept for the downlink is e.g. disclosed in the document R1-05-0594 with the title "Multi-cell Simulation Results for Interference Co-ordination in new OFDM DL" presented at 3GPP TSG RAN WG1 LTE Ad Hoc on LTE in Sophia Antipolis, France, 20-21 June 2005. For the uplink, such a concept is disclosed in the document R1-05-0593 with the title "Interference coordination for evolved UTRA uplink access" presented at RANI AdHoc on LTE, Sophia Antipolis, France, 20 - 21 June 2005.

Furthermore, also in the European Patent Application EP 05291278.9, a method for coordination of interference in the uplink is described. WO 92/12601 A1 discloses an example of coordination between cells in case of overload.

According to the above mentioned concepts and method, the power restrictions are distributed across the cells of a network, independent of the distribution of the user terminals within a cell.

These previous solutions for static interference coordination work with the assumption of evenly distributed user terminals in the area with a probability distribution that does not change. Instead by the scheduler only it has to be reacted on the fact that the local concentration of user terminals is changing from time to time.

The distribution of radio resources or distribution of restrictions to the full set of radio resources has to be changed based on the user terminal distribution.

The object of the invention is thus to propose a method for a distributed decision process between multiple base stations for the distribution of radio resources or distribution of restrictions to the full set of radio resources that takes into account the user terminal distribution in the cells.

This object is achieved by a method according to the teaching of claim 1, a base station according to the teaching of claim 11, and a multi cell communication network according to the teaching of claim 12.

The main idea of the invention is to estimate gains in data throughput based on desired changes of radio resources and to signal said desired changes and the estimated gains from one base station to another base station. Afterwards, said other base station decides which of said desired changes of radio resources are to be executed based on said gains in data throughput.

Further developments of the invention can be gathered from the dependent claims and the following description.

In the following the invention will be explained further making reference to the attached drawings.

Fig. 1 schematically shows the partitioning of an OFDM or single carrier FDMA frequency band in in this case disjoint subsets $F_x$ and the power restriction of a dedicated frequency subset $F_n$ in downlink.

Fig. 2 schematically shows a sectorized cell pattern with allocation of dedicated frequency subsets to user terminals in border region.

Fig. 3 schematically shows the throughput situation for a user terminal in the border region to a sector in which the usage of frequency subset $F_3$ is restricted in power.

Fig. 4 schematically shows an example for the allocation of radio resources from one base station to another base station on a on demand basis.

Fig. 5 schematically shows a sectorized cell pattern with restriction settings and marking as overload.

Fig. 6 schematically shows incoming requests for desired changes of radio resources from multiple requesting base stations.

A multi cell communication network according to the invention comprises user terminals and base stations.

Each of said user terminals is connected to one or multiple of said base stations, and the base stations are in turn connected to a core network.

The user terminals comprise the functionality of a user terminal for transmission and reception in a multi cell communication network for FDM transmission, i.e. they can be connected to a network by means of a base station.

The base stations comprise the functionality of a base station of a multi cell communication network for FDM transmission, i.e. they provide the possibility for user terminals to get connected to the multi cell communication network.

Furthermore, a base station according to the invention comprises at least one processing means adapted for signaling of desired changes of radio resources and gains in data throughput resulting from execution of said desired changes of radio resources in a performance model to a further base station, and deciding which of received desired changes of radio resources are to be executed based on gains in data throughput resulting from execution of said received desired changes of radio resources in a performance model.

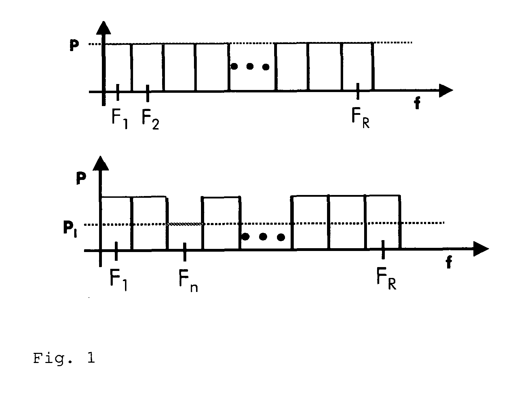

In the following, by way of example the method according to the invention is described in detail making reference to figs. 1 to 6.

The invention is based on partitioning the frequency band into frequency subsets. Fig. 1 shows in the upper part a number of $R$ disjoint frequency subsets $F_1, F_2 ... F_R$ along the frequency axis $f$. All these frequency subsets can have the same maximum power value along the power axis $p$, i.e. all frequency subsets are used with the same maximum power. These frequency subsets may contain frequency diverse frequency patterns to be robust against a frequency selective fading channel. For simplicity they are depicted as blocks over the frequency axis $f$ as given in fig. 1.

A power planning for the use of frequency subsets out of the frequency bands by the base station of a specific cell is possible. Depending on to which cell a base station belongs, in the downlink a dedicated subset can only be used with a restricted power in the cell.

This power restriction is illustrated in the lower part of fig. 1. Here, it can be seen that the dedicated subset $F_n$ can only be used maximally with the restricted power $p_l$.

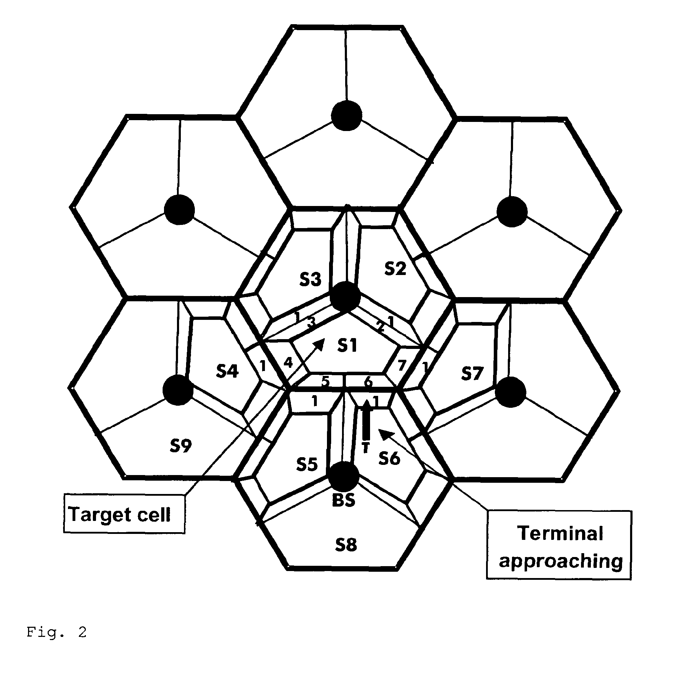

In fig. 2., an interference power planning is illustrated for sectorized hexagonal cells for the exemplary case of $R$=9 frequency subsets.

The sectors are denoted $Sn$ with $n$ indicating the dedicated frequency subset $F_n$ of the respective sector that is used with restricted power in downlink or interference burdened in uplink, and the frequency subsets $F_k$ that are preferably used by user terminals in the border regions of the sectors are denoted with the number $k$. In the inner area of the sectors, all frequency subsets are used for uplink or downlink but the respective dedicated subset $F_n$ is reduced in power in downlink or in uplink is burdened and can only be used under observation of the strong inter-cell interference inside this inner area.

User terminals are distributed across cells and are allocated to a sector as serving sector in case of sectorized cells.

The serving sector is for example a sector where frequency subset $F_x$ is restricted in power.

The task is that user terminals inside the serving sector Sx have to be scheduled to frequency subsets.

Depending on the received power from serving and interfering sectors for the user terminals it is decided whether a user terminal experiences improved signal to interference ratio in certain frequency subsets that are restricted in power in neighboring cells and are thus preferred frequency subsets for said user terminal or if all frequency subsets have the same signal to interference ratio and are thus equally appropriate for scheduling of said user terminal e.g. because it is in the inner area of the serving sector near to the antenna.

So the user terminals are sorted into groups or sets $\Theta_0, \Theta_1, \Theta_2, ..., \Theta_R$ . The group $\Theta_0$ contains the user terminals that have no frequency subset preference probably because the user terminals are located near the antenna. All user terminals inside group $\Theta_i$ experience a sector with restrictions in the frequency subset $F_i$ as their strongest interfering sector. Thus the frequency subset $F_i$ is a preferred frequency subset for the terminals in $\Theta_i$. Since it is assumed that the frequency subset $F_x$ is restricted in power inside the serving sector $Sx$, the signal to interference ratio achievable in said frequency subset is restricted.

The number of user terminals inside each group is denoted $N_0, N_1, ..., N_R$ respectively. The user terminals itself can then also be denoted $T_{01}, T_{02}, ... T_{11}, T_{12}, T_{13}, ... T_{R1}, T_{R2}, T_{R3} ...$ and so on. Now, the data throughput potential for the user terminals has to be determined. Referring to the so-called Shannon limit, the data throughput in the limit would be

$$C' = f_B \, \mathrm{ld}(1 + \frac{S}{I}) \; .$$ In this formula $f_B$ denotes the bandwidth, $S$ denotes the signal strength and $I$ denotes the interference strength.

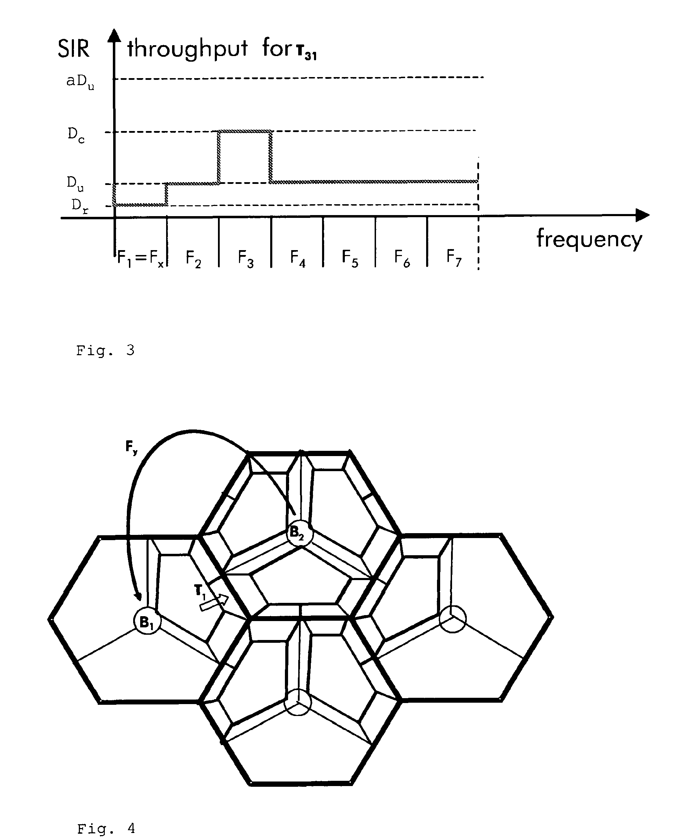

Fig. 3 shows the signal to interference ratio and consequently data throughput plotted against the frequency for a user terminal in the border region to a sector in which the use of frequency subset $F_3$ is restricted in power. The various frequency subsets are depicted along the frequency axis.

For frequencies out of the frequency subset $F_3$ an improved signal to interference ratio of maybe 3-4 dB due to interference coordination is experienced by the user terminal. For frequencies out of the frequency subsets $F_2$, $F_4$, $F_5$ etc. that are not used with restricted power inside the sector Sx signal to interference ratio of about 0 dB is experienced and for frequencies out of the frequency subset $F_x$ that is used with restricted power, a signal to interference ratio of only -10 dB or less is seen at the cell border.

From that information, the data throughput for a user terminals can be directly calculated depending on, from which part of the spectrum frequencies are allocated to the user terminal. Thus at the y-axis the data throughput values for frequencies enjoying interference coordination $D_c$ and for frequencies without improvement $D_u$ are denoted. The possible data throughput for frequencies that are restricted in power in the serving sector is denoted $D_r$. For a user terminal that is in the bad situation that it experiences as strongest interfering neighbor a sector in which the same frequency subset $F_x$ is restricted in power as in its serving sector, i.e. for a terminal from group $\Theta_x$, all frequencies can only be used with a signal to interference ratio of at most 0 dB. In the restricted frequency subset itself, because the second strongest interfering neighbor sector interferes with full power, a signal to interference ratio of only approx. -4dB occurs. This results in a reduced data throughput for the frequency subset $F_x$.

For the user terminals that are in group $\Theta_0$, all frequency subsets besides $F_x$ can equally be used with high signal to interference ratio which will result in a high data throughput denoted $aD_u$ in fig. 3, and the frequency subset $F_x$ can be used with reduced SIR which will result in a data throughput denoted $aD_r$ which is not explicitly depicted on the y-axis in fig. 3.

To a user terminal, normally frequencies from its preferred frequency subset are allocated, but if there are too many user terminals in the same cell region, a shortage of frequencies in the preferred frequency subset occurs. So it is seen that some user terminals need to share a preferred frequency subset while other user terminals have a whole preferred frequency subset on their own. In the case of shortage then also frequencies from other frequency subsets have to be allocated to the multiple user terminals.

Now a coordination of frequency subset allocation in multiple cells can incorporate a co-operation between neighboring base stations in a process that is more on demand driven.

Such an on demand driven process is depicted in fig. 4. Here, a frequency subset, e.g. the frequency subset named $F_y$, gets a power restriction in the neighbor sector that is served by the base station $B_2$ on demand. This frequency subset $F_y$ is now used by the base station B1 to serve the user terminal T1 that is approaching the border to the cell that is served by the base station $B_2$. In other words, said resource of the frequency subset $F_y$ is transferred from base station B2 to base station B1, which is indicated by the arrow from base station B2 to base station B1.

Especially if there is an unequal distribution of user terminals between the sectors and between regions of the sectors, the coordination of frequency subset allocation on demand can bring an improvement.

So the task of the invention is now to find a scheduling in the framework of interference coordination on demand and an algorithm for the allocation of radio resources, as e.g. frequency subsets, between many base stations of a network to reach the goals of user throughput (e.g. 5 percentile throughput) and sector throughput and system throughput with respect to sector specific statistics and overall network statistics.

According to the invention, a base station that is in need of additional data throughput requests changes of radio resources from a neighbour base station that lead to gains in data throughput in the cell served by the requesting base station.

Said gains in data throughput are calculated based on said changes of radio resources, and the neighbour base station decides which of said requested changes of radio resources are executed based on said gains in data throughput.

To calculate the gains in data throughput, either a model for the data throughput as depicted in fig. 3, or measured values for the data throughput from the past can be used. Said values for the data throughput are dependent on the frequency and preferably on the user terminal location.

In a preferred embodiment, a scheduler or the like is used that determines

- for the terminals in the sets $\Theta_i$ the amount of radio resources inside preferred frequency subsets $f_{pi}$ or non-preferred frequency subsets $f_{ui}$ that is needed to obtain a guaranteed minimum terminal data throughput $Th_{des}$,
- the left over amount of resources $f_{avail}$ not used to obtain said guaranteed minimum terminal data throughput $Th_{des}$ that can be used to boost the sector data throughput and which can instead be granted to neighbor base stations when there is a demand,
- or the missing radio resources - how many and from which base station - in order to achieve the guaranteed minimum terminal data throughput $Th_{des}$ again.

The guaranteed minimum terminal data throughput $Th_{des}$ is e.g. predefined for the whole multi cell communication network or signalled to the base stations during operation.

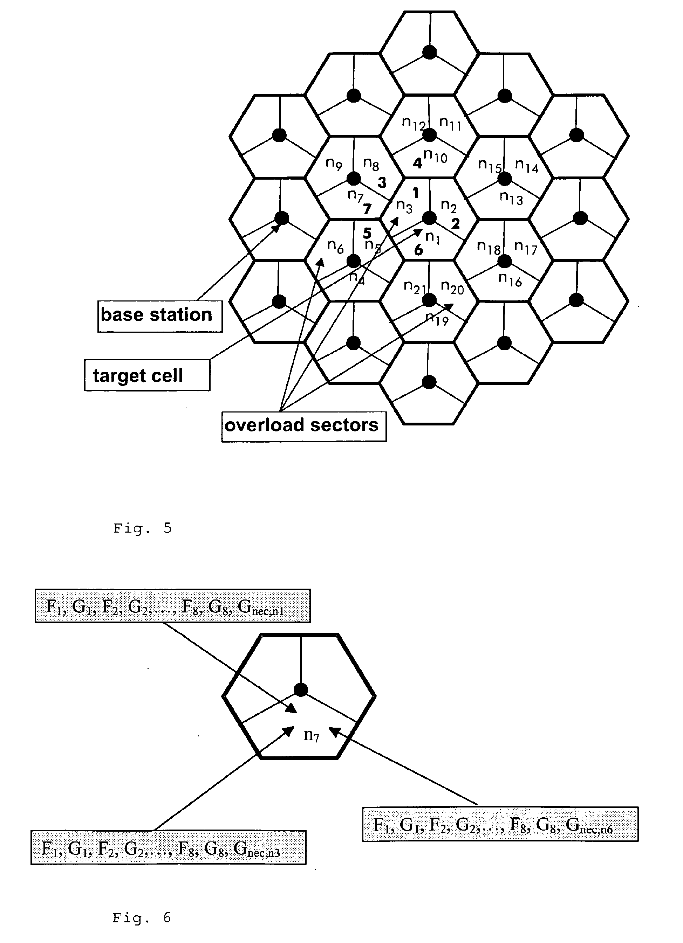

In another preferred embodiment, a scheduler or the like is used that determines for sectors of a certain area for a certain time instance whether the sectors are in overload or underload situation, i.e. whether they have radio resources left over or whether they are in need of radio resources e.g. under the assumption that the sectors have all radio resources, besides the non-available radio resources due to a-priori planned restrictions in radio resources. In fig. 5, a multi cell communication network is shown in which some of the sectors $n_k$ are indicated as overload sectors.

In another preferred embodiment, the base station that is in need of additional data throughput decides based on a requesting algorithm which neighbor base station to ask for changes of radio resources and what kind of changes of radio resources to request.

In the following an example for such a requesting algorithm is described.

In *sector* $n_k$ the groups $\Theta_i$ are determined for the neighbourhood relations as described above. The sector $n_k$ is in overload. Preferably, the largest group $\Theta_i$ defines which neighbour base station to ask for changes of radio resources since user terminals that are neighbor to the sector $n_x$ constitute the largest group. As an alternative, the user terminals with the highest service class are assigned in groups dependent on which base station constitutes the strongest interferer for the user terminals, and the largest group of user terminals with the highest service class defines which neighbour base station to ask for changes of radio resources. The sector $n_x$ should render help in form of restrictions on radio resources, as e.g. restrictions on power in dedicated frequency subsets. The existing restriction on power in sector $n_x$ on frequency subset $F_i$ is already used up, i.e. the frequency subset $F_i$ is already fully used in sector $n_k$. The sector $n_x$ can provide additional restrictions on power on frequency subset $F_j$, but the frequency subset $F_j$ is already partly used for user terminals in group $\Theta_j$. So the already used bandwidth $f_{pj}$ should be as low as possible, so that enough bandwidth in $F_j$ is left over to be scheduled without degradation for user terminals in group $\Theta_j$ to terminals in group $\Theta_i$. So if this grant of restrictions on radio resources occurs, the gain by this grant can be measured as

$$\left( \frac{F_{ges}}{R} - f_{pj} \right) \cdot (D_C - D_U) = G_j \quad \text{where } (D_C - D_U) \text{ corresponds to the throughput improvement due to the seen}$$

signal to interference ratio improvement and $F_{ges}$ is the total bandwidth, i.e. the sum of all frequency subsets.

In the same way if frequency subset $F_{j+1}$ is granted, the additional or alternative gain in throughput for cell edge terminals can be measured as $\left( \frac{F_{ges}}{R} - f_{pj+1} \right) \cdot (D_C - D_U) = G_{j+1}$ depending on how many user terminals are in group $\Theta_{j+1}$.

Further it is known in sector $n_k$ that a gain $G_{nec}$ in cell edge data throughput, that can be transformed in cell data throughput gain,

$G_{nec} = (Th_{des} - Th_{real}) \cdot Num\_terminals$ is needed, so that the guaranteed minimum terminal data throughput $Th_{des}$ is reached. In the formula above, $Th_{real}$ is the current terminal data throughput, and $Num\_terminals$ is the number of terminals in sector $n_k$.

In another embodiment, it is known in sector $n_k$ that a gain $G_{nec,Fm}$ in cell edge data throughput $G_{nec,Fm} = (Th_{des,Fm} - Th_{real,Fm}) \cdot Num\_terminals$ in a dedicated frequency subset $F_m$ is needed, so that the guaranteed minimum terminal data throughput $Th_{des,Fm}$ in the dedicated frequency subset $F_m$ is reached. In the formula above, $Th_{real,Fm}$ is the current data throughput in the dedicated frequency subset $F_m$, and *Num*_terminals is the number of terminals in sector $n_k$.

Preferably, a sector $n_x$ is asked to render help by means of restricting radio resources on appropriate frequency subsets $F_j$ by means of sending information about appropriate frequency subsets $F_j$ and related possible gains $G_j$ to the base station of the sector $n_x$. Said information about the possible gains $G_j$ is preferably sent in form of derived priority values based on the ranking of the gains $G_j$.

In fig. 6, as an example, the arrival of three requests for restrictions of radio resources from three different requesting base stations at the base station of sector $n_7$ is depicted. Said requests comprise information about appropriate frequency subsets and related possible gains $F_1$, $G_1$, $F_2$, $G_2$, ... $F_i$, $G_j$, ... $F_8$, $G_8$. Additionally, in the example also information about the necessary gain in cell edge or cell data throughput $G_{nec,n1}$, $G_{nec,n3}$, $G_{nec,n6}$ for the respective requesting sector $n_1$, $n_3$, $n_6$ associated to the respective requesting base station are sent to the base station of sector $n_7$.

In another embodiment, information about the necessary gain $G_{nec,Fm}$ in cell edge or cell data throughput in a dedicated frequency subset $F_m$ is sent from the base station of the sector $n_k$ to the base station of the sector $n_x$.

Preferably, said information about the necessary gain $G_{nec}$ in cell data throughput or about the necessary gain $G_{nec,Fm}$ in cell data throughput in a dedicated frequency subset $F_m$ is sent in form of derived priority values based on the ranking of the necessary gains $G_{nec}$ in cell data throughput or on the ranking of the necessary gains $G_{nec,Fm}$ in cell data throughput in a dedicated frequency subset $F_m$ respectively.

It is clear that when *sector $n_k$* has a planned restriction in frequency subset $F_k$, the gain of getting granted restrictions on radio resources in the frequency subset $F_k$ in sector $n_x$ is zero, i.e. the possible gain is $G_k = 0$ since the subset can not be used at the cell edge.

When a base station has received at least one request for restrictions on radio resources, the base station sorts said at least one request in a grant algorithm that is based at least on information about appropriate frequency subsets $F_j$ and related possible gains $G_j$ and allocates the restrictions on radio resources fairly to the requesting base stations.

The arrival of the different requests for restrictions on radio resources in one providing sector is shown in fig. 6, as already described above.

In the following an example for a grant algorithm is described.

In sector $n_x$ the groups $\Theta_i$ are determined for the frequency subsets as described above. The sector $n_x$ is in underload, so it has remaining bandwidth $f_{avail} > 0$ to boost the sector data throughput which is now used to render help to neighbour sectors. If an additional restriction on the frequency subset $F_i$ is imposed, the user terminals in group $\Theta_i$ using bandwidth $f_{pi}$ can not be scheduled on this frequency subset $F_i$ any more, so the so far used bandwidth $f_{pi}$ should be as low as possible. The user terminals in group $\Theta_i$ have then to be scheduled on unpreferred frequencies where there is no signal to interference ratio improvement and the loss in cell edge data throughput by this imposed restriction is then $L_i = f_{pi}(D_C - D_U)$ or $- L_i = f_{pi}(D_U - D_C)$. In the same way if frequency subset $F_{i+1}$ is also restricted, the additional loss is $L_{i+1} = f_{pi+1}(D_C - D_U)$. These losses must not become more than what sector $n_x$ can provide corresponding to the remaining bandwidth $f_{avail}$.

On the other hand with the imposed restriction on frequency subset $F_i$, the neighbor sectors $n_k$, $n_l$ and $n_m$ have a certain gain $G_{n_k,i}$, $G_{n_l,i}$ and $G_{n_m,i}$ in cell edge data throughput as was signaled. Further it was also signaled from the base stations of the requesting neighbor sectors what the necessary gain in cell edge or cell data throughput $G_{nec,nk}$ is, in order that the requesting sector can reach a guaranteed minimum terminal data throughput $Th_{des}$. The losses and gains can be added up for each frequency subset $F_i$ as $-L_i + G_{nk,i} + G_{nl,i} + G_{nm,i}$.

Further the necessary gains in cell data throughput $G_{nec,nk}$, $G_{nec,nl}$, $G_{nec,nm}$ are known.

So the task to fairly respond to the requests for restrictions on radio resources can be solved by taking the above mentioned values into account. One possible method to take the different severity of the above mentioned needs into account is described in the following:

The weights $w_{n_k} = \dfrac{G_{nec,n_k}}{\sum\limits_{n_j} G_{nec,n_j}}$ are defined and are put in the expression $-L_i + W_{n_k} \cdot G_{n_k,i} + w_{n_l} \cdot G_{n_l,i} + w_{n_m} \cdot G_{n_m,i}$.

Now the frequency subset $F_i$ is restricted where this expression is maximum. Further the second highest and third highest expressions determine which next frequency subsets $F_p$, $F_q$ are restricted. In this sequential decision, it is checked whether the losses $L_i + L_p + L_q$ do not exceed the bearable loss due to remaining bandwidth $f_{avail}$. Further it is checked whether the necessary gains in cell edge or cell data throughput are already obtained. In either case no further frequency subset is restricted corresponding to no further grant being given. In an embodiment of the invention, to be prepared for further requests, not all bearable loss is accepted to be prepared for further requests.

Another possible method to take the different severity of the above mentioned needs into account is described in the following:

According to this method, another expression is minimized by the frequency subset restriction selection. If ramp(x) defines the function $\mathrm{ramp}(x) = \begin{cases} x \wedge x > 0 \\ 0 \wedge x \leq 0 \end{cases}$ , the expression

$$\mathrm{ramp}^2(G_{nec,n_k} - \sum_i G_{n_k,i}) + \mathrm{ramp}^2(G_{nec,n_l} - \sum_i G_{n_l,i}) + \cdots + \mathrm{ramp}^2(G_{nec,n_m} - \sum_i G_{n_m,i}) \rightarrow \mathrm{Min} \quad \text{is}$$

minimized by selection of frequency subsets under the constraint that the total loss $\sum_i L_i$ does not exceed the bearable loss given by the remaining bandwidth $f_{avail}$. So as a result, the selected restrictions on certain frequency subsets are determined and these grants are signaled to all requesting base stations of neighbor sectors.

If after a first round requesting sectors have not obtained enough radio resources on their first request, in a second round they can ask the base station of another neighbor sector $n_y$ and again in the provision step, said other base station of a providing sector grants resources taking the already granted restrictions on radio resources into account. At the beginning of a period with some rounds the request and the grants are calculated on the assumption of having all besides the non-available radio resources due to network planning. That is also they are calculated on the assumption of a fresh start, so grants from a previous distribution period are not considered valid anymore.

These requesting and granting can be repeated in a third and fourth round as given by an algorithm parameter that is not too high to limit the necessary inter-node communication.

However if after all requests a requesting sector has got granted now enough radio resources to be able to provide to other neighbour sectors, the requesting sector does not become a providing sector.

After all grants or restrictions on radio resources are determined, they may differ from the grants of a previous validity period. So there is either the possibility that grants are automatically considered invalid after expiration of a previous validity period, or for the no longer valid restrictions the base stations have to send a notice of termination to the neighbor base stations that have previously received the grants. In case of termination the termination becomes effective approximately $T_{trans} \approx 20$ ms after message is sent. In case of a new restriction it becomes effective immediately after the message has been sent.

So after the rounds, i.e. the adaptation period, all valid grants have been sent. With this newly set restrictions that became valid in a new validity period, all base stations do their scheduling. The user terminals move around until after a fixed time of e.g. 1s or 5s a new determination of the load situation is performed. Then new requests are formulated renewing or changing the old ones. After decision in the providing sectors, it is announced if old grants are terminated and if new resources are provided, and this is again communicated.

Aligning transition times between validity periods in different base stations is easier in synchronized networks, but in asynchronous networks, a broadcast message can be used for initiating a new validity period. In the new validity period, scheduling goes on until a new determination is performed.

**Claims**

1. A method for allocation of radio resources ($F_1$, $F_2$...) in multi cell communication networks, wherein

   • at least one requesting base station (B1) signals desired changes of radio resources ($F_1$, $F_2$...) and at least one of achievable gains ($G_1$, $G_2$...) in data throughput resulting from execution of said desired changes of radio resources in a performance model and derived priority values of said desired changes to a further base station (B2),
   • and the further base station (B2) decides which of said desired changes of radio resources ($F_1$, $F_2$...) are to be executed based on at least one of said derived priority values and achievable gains ($G_1$, $G_2$... in the respective data throughput related to said at least one requesting base station (B1).

2. A method according to claim 1, **characterized in, that** the performance model is based on at least one of measured and estimated data throughput dependent on at least one of frequency resource usage, time resource usage and user terminal location.

3. A method according to claim 1, **characterized in,**

• **that** said at least one requesting base station (B1) signals at least one of necessary data throughput increase ($G_{nec,n1}$), necessary data throughput increase in a dedicated frequency subset and derived priority values of said necessary data throughput increase or of said necessary data throughput increase in a dedicated frequency subset to said further base station (B2),

• and the further base station (B2) decides which of said desired changes of radio resources ($F_1$, $F_2$...) are to be executed based on said at least one of necessary data throughput increase ($G_{nec,n1}$), necessary data throughput increase in a dedicated frequency subset, and derived priority values.

4. A method according to claim 3, **characterized in, that** the decision of the further base station (B2) which of said desired changes of radio resources are to be executed takes a desired quality of service into account.

5. A method according to claim 1, **characterized in, that** said at least one requesting base station (B1) serves a cell that is in overload situation.

6. A method according to claim 1, **characterized in, that** said further base station (B2) only executes at least one of said desired changes of radio resources ($F_1$, $F_2$...) if the further base station (B2) is in underload situation.

7. A method according to claim 1, **characterized in, that** said further base station (B2) is defined as that base station next to a dedicated base station of said at least one requesting base station (B1), from which the most user terminals in the cell that is served by the dedicated base station of said at least one requesting base station (B1) receive the strongest interference.

8. A method according to claim 1, **characterized in, that** the requesting and granting of desired changes of radio resources ($F_1$, $F_2$...) is carried out in a sequential form of requests and grants between neighbor base stations (B1,B2) in a subarea of the multi cell communication network with limited number of neighbor signaling resulting in a resource allocation valid for a dedicated time period.

9. A method according to claim 1, **characterized in, that** executed desired changes of radio resources ($F_1$, $F_2$...) are invalid after expiration of a dedicated validity period.

10. A method according to claim 1, **characterized in, that** executed desired changes of radio resources ($F_1$, $F_2$...) are invalid when the requesting base station (B1) receives a notice of termination of said desired changes of radio resources.

11. A base station (B1, B2) of a multi cell communication network, said base station comprising at least one processing means adapted to perform

• signaling of desired changes of radio resources ($F_1$, $F_2$...) and at least one of achievable gains ($G_1$, $G_2$...) in data throughput resulting from execution of said desired changes of radio resources ($F_1$, $F_2$...) in a performance model and derived priority values of said desired changes to a further base station,

• and deciding which of received desired changes of radio resources ($F_1$, $F_2$...) are to be executed based on at least one of achievable gains ($G_1$, $G_2$...) in at least one of neighbor cell data throughput resulting from execution of said received desired changes of radio resources ($F_1$, $F_2$...) in a performance model and derived priority values of said received desired changes.

12. A multi cell communication network comprising user terminals and at least one base station (B1, B2) said at least one base station (B1, B2) comprising at least one processing means adapted to perform

• signaling of desired changes of radio resources ($F_1$, $F_2$...) and at least one of achievable gains ($G_1$, $G_2$...) in data throughput resulting from execution of said desired changes of radio resources ($F_1$, $F_2$...) in a performance model and derived priority values of said desired changes to a further base station,

• and deciding which of received desired changes of radio resources ($F_1$, $F_2$...) are to be executed based on at least one of achievable gains ($G_1$, $G_2$...) in at least one of neighbor cell data throughput resulting from execution of said received desired changes of radio resources ($F_1$, $F_2$...) in a performance model and derived priority values of said received desired changes.

**Patentansprüche**

1. Verfahren zur Zuweisung von Funkressourcen ($F_1$, $F_2$...) in mehrzelligen Kommunikationsnetzwerken, wobei

   • mindestens eine anfordernde Basisstation (B1) gewünschte Änderungen von Funkressourcen ($F_1$, $F_2$...) und mindestens entweder erzielbare Steigerungen ($G_1$, $G_2$...) des Datendurchsatzes aufgrund der Durchführung der besagten gewünschten Änderungen von Funkressourcen in einem Leistungsmodell oder abgeleitete Prioritätswerte der besagten gewünschten Änderungen an eine weitere Basisstation (B2) signalisiert,
   • und die weitere Basisstation (B2) auf der Basis mindestens entweder der besagten abgeleiteten Prioritätswerte oder der erreichbaren Verstärkungen ($G_1$, $G_2$...) in dem jeweiligen auf die besagte mindestens eine anfordernde Basisstation (B1) bezogenen Datendurchsatz (B1) entscheidet, welche der besagten gewünschten Änderungen von Funkressourcen ($F_1$, $F_2$... durchgeführt werden sollen.

2. Verfahren nach Anspruch 1, **dadurch gekennzeichnet, dass** das Leistungsmodell auf mindestens entweder einem gemessenen oder einem geschätzten Datendurchsatz in Abhängigkeit von mindestens entweder der Nutzung von Frequenzressourcen, der Nutzung von Zeitressourcen oder dem Standort des Benutzerendgeräts basiert.

3. Verfahren nach Anspruch 1, **dadurch gekennzeichnet, dass**

   • die besagte mindestens eine anfordernde Basisstation (B1) mindestens entweder die erforderliche Datendurchsatzerhöhung ($G_{nec,n1}$), die erforderliche Datendurchsatzerhöhung in einem dedizierten Frequenz-Teilsatz oder die abgeleiteten Prioritätswerte der besagten erforderlichen Datendurchsatzerhöhung oder der besagten erforderlichen Datendurchsatzerhöhung in einem dedizierten Frequenz-Teilsatz an die besagte weitere Basisstation (B2) signalisiert,
   • und die weitere Basisstation (B2) auf der Basis zumindest entweder der besagten erforderlichen Datendurchsatzerhöhung ($G_{nec,n1}$), der erforderlichen Datendurchsatzerhöhung in einem dedizierten Frequenz-Teilsatz oder der abgeleiteten Prioritätswerte entscheidet, welche der besagten gewünschten Änderungen von Funkressourcen ($F_1$, $F_2$) durchgeführt werden sollen.

4. Verfahren nach Anspruch 3, **dadurch gekennzeichnet, dass** die Entscheidung der weiteren Basisstation (B2) darüber, welche der besagten gewünschten Änderungen von Funkressourcen durchgeführt werden sollen, unter Berücksichtigung einer gewünschten Dienstgüte erfolgt.

5. Verfahren nach Anspruch 1, **dadurch gekennzeichnet, dass** die besagte mindestens eine anfordernde Basisstation (B1) eine Zelle bedient, die sich in einem Überlastungszustand befindet.

6. Verfahren nach Anspruch 1, **dadurch gekennzeichnet, dass** die besagte weitere Basisstation (B2) nur dann mindestens eine der besagten gewünschten Änderungen von Funkressourcen ($F_1$, $F_2$'') ausführt, wenn sich die weitere Basisstation (B2) in einem Unterlastungszustand befindet.

7. Verfahren nach Anspruch 1, **dadurch gekennzeichnet, dass** die besagte weitere Basisstation (B2) als diejenige Basisstation, die mit einer dedizierten Basisstation der besagten mindestens einen anfordernden Basisstation (B1) benachbart ist, von welcher die meisten Benutzerendgeräte in der Zelle, welche von der dedizierten Basisstation der besagten mindestens einen anfordernden Basisstation (B1) bedient wird, die stärkste Interferenz empfangen, definiert wird.

8. Verfahren nach Anspruch 1, **dadurch gekennzeichnet, dass** das Anfordern und das Bewilligen von gewünschten Änderungen von Funkressourcen ($F_1$, $F_2$''') in einer sequenziellen Form von Anforderungen und Bewilligungen zwischen benachbarten Basisstationen (B1, B2) in einem Teilbereich des mehrzelligen Kommunikationsnetzwerks mit begrenzter Anzahl von Nachbarsignalisierungen, welche zu einer für einen dedizierten Zeitraum gültigen Ressourcenzuweisung führen, erfolgt.

9. Verfahren nach Anspruch 1, **dadurch gekennzeichnet, dass** ausgeführte gewünschte Änderungen von Funkressourcen ($F_1$, $F_2$''') nach Ablauf einer dedizierten Gültigkeitsdauer ungültig sind.

10. Verfahren nach Anspruch 1, **dadurch gekennzeichnet, dass** ausgeführte gewünschte Änderungen von Funkressourcen ($F_1$, $F_2$''') ungültig sind, wenn die anfordernde Basisstation (B1) eine Benachrichtigung über den Abschluss der besagten gewünschten Änderungen von Funkressourcen empfängt.

**11.** Basisstation (B1, B2) eines mehrzelligen Kommunikationsnetzwerks, wobei die besagte Basisstation mindestens ein Verarbeitungsmittel umfasst, welches für das Durchführen der folgenden Schritte ausgelegt ist:

• Signalisieren von gewünschten Änderungen von Funkressourcen ($F_1$, $F_2$''') und von mindestens entweder erzielbaren Steigerungen ($G_1$, $G_2$''') des Datendurchsatzes aufgrund der Durchführung der besagten gewünschten Änderungen von Funkressourcen ($F_1$, $F_2$''') in einem Leistungsmodell oder abgeleiteten Prioritätswerten der besagten gewünschten Änderungen an eine weitere Basisstation,
• und Entscheiden, auf der Basis mindestens entweder der erzielbaren Steigerungen ($G_1$, $G_2$''') mindestens entweder des Datendurchsatzes einer Nachbarzelle aufgrund der Durchführung der besagten empfangenen gewünschten Änderungen von Funkressourcen ($F_1$, $F_2$''') in einem Leistungsmodell oder der abgeleiteten Prioritätswerte der besagten empfangenen gewünschten Änderungen, welche der empfangenen gewünschten Änderungen von Funkressourcen ($F_1$, $F_2$,..) durchgeführt werden sollen.

**12.** Mehrzelliges Kommunikationsnetzwerk, umfassend Benutzerendgeräte und mindestens eine Basisstation (B1, B2), wobei die besagte mindestens eine Basisstation (B1, B2) mindestens ein Verarbeitungsmittel umfasst, welches für das Durchführen der folgenden Schritte ausgelegt ist:

• Signalisieren von gewünschten Änderungen von Funkressourcen ($F_1$, $F_2$''') und von mindestens entweder erzielbaren Steigerungen ($G_1$, $G_2$''') des Datendurchsatzes aufgrund der Durchführung der besagten gewünschten Änderungen von Funkressourcen ($F_1$, $F_2$''') in einem Leistungsmodell oder abgeleiteten Prioritätswerten der besagten gewünschten Änderungen an eine weitere Basisstation,
• und Entscheiden, auf der Basis mindestens entweder der erzielbaren Steigerungen ($G_1$, $G_2$...) mindestens entweder des Datendurchsatzes einer Nachbarzelle aufgrund der Durchführung der besagten empfangenen gewünschten Änderungen von Funkressourcen ($F_1$, $F_2$''') in einem Leistungsmodell oder der abgeleiteten Prioritätswerte der besagten empfangenen gewünschten Änderungen, welche der empfangenen gewünschten Änderungen von Funkressourcen ($F_1$, F2''') durchgeführt werden sollen.

## Revendications

**1.** Procédé d'allocation de ressources radioélectriques ($F_1$, $F_2$''') dans des réseaux de communication multicellulaires, selon lequel

• au moins une station de base demandeuse (B1) signale à une autre station de base (B2) les modifications souhaitées des ressources radioélectriques ($F_1$, $F_2$''') et au moins les gains pouvant être réalisés ($G_1$, $G_2$''') dans le débit des données résultant de l'exécution desdites modifications souhaitées des ressources radioélectriques dans un modèle de performances ou les valeurs de priorité dérivées desdites modifications souhaitées,
• et l'autre station de base (B2) décide lesquelles desdites modifications souhaitées des ressources radioélectriques ($F_1$, $F_2$''') doivent être exécutées en se basant au moins sur lesdites valeurs de priorité dérivées ou lesdits gains pouvant être réalisés ($G_1$, $G_2$''') dans le débit de données correspondant en rapport avec ladite au moins une station de base demandeuse (B1).

**2.** Procédé selon la revendication 1, **caractérisé en ce que** le modèle de performances est basé au moins sur un débit de données mesuré ou un débit de données estimé au moins en fonction de l'utilisation des ressources de fréquence, de l'utilisation des ressources de temps ou de l'emplacement du terminal d'utilisateur.

**3.** Procédé selon la revendication 1, **caractérisé en ce**

• **que** ladite au moins une station de base demandeuse (B1) signale au moins une augmentation nécessaire du débit des données ($G_{nec,n1}$), une augmentation du débit des données nécessaire dans un sous-ensemble de fréquences dédié ou les valeurs de priorité dérivées de ladite augmentation nécessaire du débit des données ou encore de ladite augmentation nécessaire du débit des données dans un sous-ensemble de fréquences dédié de ladite autre station de base (B2),
• et l'autre station de base (B2) décide lesquelles desdites modifications souhaitées des ressources radioélectriques ($F_1$, $F_2$''') doivent être exécutées en se basant au moins sur ladite augmentation nécessaire du débit des données ($G_{nec,n1}$), ladite augmentation du débit des données nécessaire dans un sous-ensemble de fréquences dédié ou lesdites valeurs de priorité dérivées.

**4.** Procédé selon la revendication 3, **caractérisé en ce que** la décision de l'autre station de base (B2) concernant lesquelles desdites modifications souhaitées des ressources radioélectriques doivent être exécutées tient compte d'une qualité de service souhaitée.

**5.** Procédé selon la revendication 1, **caractérisé en ce que** ladite au moins une station de base demandeuse (B1) fait office de cellule qui se trouve dans une situation de surcharge.

**6.** Procédé selon la revendication 1, **caractérisé en ce que** ladite autre station de base (B2) exécute uniquement au moins l'une desdites modifications souhaitées des ressources radioélectriques ($F_1$, $F_2'''$) si l'autre station de base (B2) se trouve en situation de faible charge.

**7.** Procédé selon la revendication 1, **caractérisé en ce que** ladite autre station de base (B2) est définie comme étant la station de base proche d'une station de base dédiée de ladite au moins une station de base demandeuse (B1), depuis laquelle la majorité des terminaux d'utilisateur dans la cellule qui est desservie par la station de base dédiée de ladite au moins une station de base demandeuse (B1) reçoivent les interférences les plus fortes.

**8.** Procédé selon la revendication 1, **caractérisé en ce que** la demande et l'acceptation des modifications souhaitées des ressources radioélectriques ($F_1$, $F_2'''$) sont réalisées sous une forme séquentielle de demandes et d'acceptations entre les stations de base voisines ($B_1$, $B_2$) dans un sous-domaine du réseau de communication multicellulaire avec un nombre limité de signalisations de voisinage résultant en une allocation des ressources valide pendant une période dédiée.

**9.** Procédé selon la revendication 1, **caractérisé en ce que** les modifications souhaitées exécutées des ressources radioélectriques ($F_1$, $F_2'''$) sont invalides après l'expiration d'une période de validité dédiée.

**10.** Procédé selon la revendication 1, **caractérisé en ce que** les modifications souhaitées exécutées des ressources radioélectriques ($F_1$, $F_2'''$) sont invalides lorsque la station de base demandeuse (B1) reçoit une notification de terminaison desdites modifications souhaitées des ressources radioélectriques.

**11.** Station de base (B1, B2) d'un réseau de communication multicellulaire, ladite station de base comprenant au moins un moyen de traitement adapté pour exécuter les étapes suivantes

• signalisation à une autre station de base des modifications souhaitées des ressources radioélectriques ($F_1$, $F_2'''$) et au moins des gains pouvant être réalisés ($G_1$, $G_2'''$) dans le débit des données résultant de l'exécution desdites modifications souhaitées des ressources radioélectriques ($F_1$, $F_2'''$) dans un modèle de performances ou des valeurs de priorité dérivées desdites modifications souhaitées,
• et décision desquelles des modifications souhaitées reçues des ressources radioélectriques ($F_1$, $F_2'''$) doivent être exécutées en se basant au moins sur les gains pouvant être réalisés ($G_1$, $G_2'''$) dans le débit des données d'au moins une cellule voisine en résultat de l'exécution desdites modifications souhaitées des ressources radioélectriques ($F_1$, $F_2'''$) dans un modèle de performances ou sur les valeurs de priorité dérivées desdites modifications souhaitées reçues.

**12.** Réseau de communication multicellulaire comprenant des terminaux d'utilisateur et au moins une station de base (B1, B2), ladite au moins une station de base (B1, B2) comprenant au moins un moyen de traitement pour exécuter les étapes suivantes

• signalisation à une autre station de base des modifications souhaitées des ressources radioélectriques ($F_1$, $F_2'''$) et au moins des gains pouvant être réalisés ($G_1$, $G_2'''$) dans le débit des données résultant de l'exécution desdites modifications souhaitées des ressources radioélectriques ($F_1$, $F_2'''$) dans un modèle de performances ou des valeurs de priorité dérivées desdites modifications souhaitées,
• et décision desquelles des modifications souhaitées reçues des ressources radioélectriques ($F_1$, $F_2'''$) doivent être exécutées en se basant au moins sur les gains pouvant être réalisés ($G_1$, $G_2'''$) dans le débit des données d'au moins une cellule voisine en résultat de l'exécution desdites modifications souhaitées des ressources radioélectriques ($F_1$, $F_2'''$) dans un modèle de performances ou sur les valeurs de priorité dérivées desdites modifications souhaitées reçues.

Fig. 1

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 05291278 A

- WO 9212601 A1

### Non-patent literature cited in the description

- Multi-cell Simulation Results for Interference Co-ordination in new OFDM DL. *3GPP TSG RAN WG1 LTE Ad Hoc on LTE,* 20 June 2005

- Interference coordination for evolved UTRA uplink access. *RANI AdHoc on LTE,* 20 June 2005